# EUROPÄISCHE PATENTANMELDUNG

(11) **EP 4 393 822 A1**
(43) Veröffentlichungstag der Anmeldung: **03.07.2024**
(21) Anmeldenummer: 22217306.4
(22) Anmeldetag: 30.12.2022
(51) Int. Cl.: B64D 13/00, B64F 5/40, F16L 11/02

(54) **VERFAHREN ZUR NUTZUNG EINES LUFTVERTEILUNGSSYSTEMS IN EINEM FLUGZEUGRUMPF**

(71) Anmelder: Airbus Operations GmbH, 21129 Hamburg (DE)
(72) Erfinder: Lohmar, Jens, 21129 Hamburg (DE)

(57) **Zusammenfassung**

Die Erfindung betrifft ein Verfahren zur Nutzung eines Luftverteilungssystems in einem Flugzeugrumpf, mit den folgenden Verfahrensschritten: Bereitstellen 100 eines Luftverteilungssystems, das einen Luftverteilungsstrang umfasst, der zumindest teilweise aus einem fluiddichten und flexiblen Material gebildet ist, wobei der Luftverteilungsstrang, von einem ersten Zustand, in dem das flexible Material im Wesentlichen straff ist, in einen zweiten Zustand, in dem das flexible Material im Wesentlichen schlaff ist, wechseln kann, Anordnen 110 des Luftverteilungsstrangs an einem Einsatzort in dem Flugzeugrumpf, Einnehmen 120 des ersten Zustands des Luftverteilungsstrangs um das Luftverteilungssystem zu betreiben, oder Einnehmen 130 des zweiten Zustands des Luftverteilungsstrangs um einen räumlichen Bereich in der Nähe des Einsatzorts zu warten.

## Beschreibung

Die Erfindung betrifft ein Verfahren zur Nutzung eines Luftverteilungssystems in einem Flugzeugrumpf.

### Gebiet der Erfindung

Derartige Luftverteilungssysteme werden als ein Bestandteil von Flugzeugklimatisierungssystemen genutzt, die der Einstellung und Aufrechterhaltung der gewünschten Umgebungsbedingungen in der Flugzeugkabine, beispielsweise des Kabinendrucks, der Kabinentemperatur und der Kabinenfeuchtigkeit dienen.

Die Kabine eines Passagierflugzeugs wird üblicherweise sowohl im Flugbetrieb als auch im Bodenbetrieb des Flugzeugs mittels einer flugzeugeigenen Klimaanlage klimatisiert. Der Flugzeugklimaanlage wird beispielsweise den Triebwerkskompressoren oder Hilfstriebwerkskompressoren entnommene Zapfluft zugeführt, die in den Klimaaggregaten, den so genannten Klimapacks der Flugzeugklimaanlage, auf eine gewünschte tiefe Temperatur abgekühlt wird. Die in den Klimapacks der Flugzeugklimaanlage abgekühlte Luft wird in einen Mischer geleitet, wo sie mit aus der Flugzeugkabine abgesaugter Rezirkulationsluft vermischt wird. Die in dem Mischer erzeugte Mischluft aus von den Klimapacks bereitgestellter kalter Frischluft und aus der Flugzeugkabine abgesaugter Rezirkulationsluft wird schließlich zur Klimatisierung der Flugzeugkabine in die Flugzeugkabine eingeleitet.

Bei herkömmlichen Flugzeugklimatisierungssystemen wird die erzeugte Mischluft über ein Luftverteilungssystem in die Flugzeugkabine eingeleitet. Da die zentralen Mischer typischerweise im Unterdeckbereich, insbesondere im Bereich der so genannten "Belly Fairing" des Flugzeugs (in etwa im vorderen Bereich des Flügelmittelkastens), angeordnet sind, gelangt die gemischte Luft zunächst über longitudinal verlaufende Luftverteilungsrohre und dann über Steigrohre (so genannte "Riser Ducts") zu den Passagierbereichen im Oberdeck des Flugzeugs.

Alternativ sind bereits beispielsweise aus der DE 10 2017 112 594 A1 Systeme zur Mischung und Verteilung von Luft in Flugzeugkabinen bekannt, die einen sich im Wesentlichen in einer Kabinenlängsrichtung erstreckenden, fluiddicht verbundenen Luftverteilungsstrang umfassen. Von derartigen einteiligen Luftverteilungssträngen zweigen dann weitere, kleine Luftverteilungsrohre in die Flugzeugkabine ab.

Flugzeuge sind typischerweise regelmäßigen Wartungszyklen unterworfen. Bei der Wartung ist häufig auch die Struktur des Flugzeugrumpfs zu inspizieren, d.h. auf Unregelmäßigkeiten jedweder Art zu überprüfen. Hierfür müssen unter Umständen im Rumpfinneren installierte Elemente aufwändig abmontiert und vorübergehend entfernt werden, um für den Inspektionsschritt Zugang zu den entsprechend zu inspizierenden Stellen zu gewähren. Bei den vorbekannten Luftverteilungssträngen kann dies einen erheblichen Aufwand bedeuten.

Es ist die Aufgabe der vorliegenden Erfindung, ein Verfahren zur Nutzung eines Luftverteilungssystems in einem Flugzeugrumpf vorzugeben, das eine einfachere bzw. weniger aufwändige Wartung bzw. Inspektion des Flugzeugrumpfs erlaubt.

### Beschreibung der Erfindung

Die Aufgabe der Erfindung wird gelöst durch ein Verfahren zur Nutzung eines Luftverteilungssystems in einem Flugzeugrumpf, mit den folgenden Verfahrensschritten: Bereitstellen eines Luftverteilungssystems, das einen Luftverteilungsstrang umfasst, der zumindest teilweise aus einem fluiddichten und flexiblen Material gebildet ist, wobei der Luftverteilungsstrang, von einem ersten Zustand, in dem das flexible Material im Wesentlichen straff ist, in einen zweiten Zustand, in dem das flexible Material im Wesentlichen schlaff ist, wechseln kann; Anordnen des Luftverteilungsstrangs an einem Einsatzort in dem Flugzeugrumpf; Einnehmen des ersten Zustands des Luftverteilungsstrangs, um das Luftverteilungssystem zu betreiben; oder Einnehmen des zweiten Zustands des Luftverteilungsstrangs um einen räumlichen Bereich in der Nähe des Einsatzorts zu warten. Das erfindungsgemäße Verfahren macht sich zu Nutze, dass der Luftverteilungsstrang aufgrund seiner Beschaffenheit durch Ablassen von Luft sein Volumen reduzieren kann. Auf diese Weise kann lokal oder über größere räumliche Bereiche Zugang zu sonst hinter dem Luftverteilungsstrang liegenden Rumpf-Strukturen gewährt werden und somit eine einfachere bzw. weniger aufwändige Wartung des Flugzeugrumpfs ermöglicht werden. Bevorzugt kann also der Luftverteilungsstrang, von dem ersten Zustand, in dem das flexible Material im Wesentlichen straff ist, in den zweiten Zustand, in dem das flexible Material im Wesentlichen schlaff ist, hin und her wechseln. Während des Betriebs des Luftverteilungssystems wird entsprechend der erste Zustand eingenommen. Um einen räumlichen Bereich in der Nähe des Luftverteilungsstrangs zu warten oder zu inspizieren, wird der zweite Zustand eingenommen. Der zweite Zustand kann gewissermaßen als eine Unterbrechung des ersten (Betriebs-) Zustands aufgefasst werden.

Dies ist grundsätzlich möglich, da der Luftverteilungsstrang zumindest teilweise aus einem fluiddichten und flexiblen Material gebildet ist. Denn dadurch ist dieser im Hinblick auf seine Form nachgiebig bzw. formbar ausgebildet. In einem (ersten) bedruckten Zustand (wenn Luft während des Betriebs zu Klimatisierungs- und Versorgungszwecken über das Luftverteilungssystem in die Flugzeugkabine geleitet wird) dimmt der Luftverteilungsstrang in der Regel sein volles Volumen ein. Dann wird typischerweise der volle Querschnitt des Luftverteilungsstrangs ausgefüllt und das flexible Material ist straff. Im (zweiten) nicht bedruckten Zustand hingegen (während der Wartung oder Inspektion) kann sich die Form des Luftverteilungsstrangs prinzipiell ändern und deren Volumen kann sich verringern. Dann kann der Querschnitt des Luftverteilungsstrangs reduziert sein bzw. das flexible Material ist dann schlaff.

Der vorteilhafte Zugang während des zweiten Zustands kann wie vorbeschrieben lokal erfolgen, d.h. es ist beispielsweise möglich, dass im schlaffen Zustand des flexiblen Materials lediglich eine vergleichsweise geringe Volumenreduzierung im Luftverteilungsstrang erfolgt und somit der entsprechende Zugang lokal begrenzt ist (z.B. für die Größe eines so genannte "Manholes" also einer Öffnung, durch die eine Person bzw. ein Werker hindurchpasst). Der Zugang kann alternativ auch über größere räumliche Bereiche erfolgen (durch eine entsprechend größere Volumenreduktion). Beispielsweise kann eine Volumenreduktion im Luftverteilungsstrang über die Länge mehrerer Sitzreihen hinweg signifikant erfolgen, sodass wesentliche Bereiche der hinter dem Luftverteilungsstrang liegenden Struktur freigelegt und inspiziert bzw. gewartet werden können.

Grundsätzlich können sich Luftverteilungsstränge dadurch, dass sie aus einem fluiddichten und flexiblen Material gebildet sind, vorteilhaft an den zur Verfügung stehenden Bauraum bzw. das zur Verfügung stehende Volumen anpassen. Auch lastbedingte Verformungen der Rumpfstruktur können von einem flexiblen Material gut abgefangen bzw. kompensiert werden. Das flexible Material kann prinzipiell eine zusätzliche Isolationsschicht aufweisen oder mit einer solchen versehen sein.

Durch das erfindungsgemäße Verfahren kann vorteilhaft Zugang zu Bereichen hinter einem Luftverteilungsstrang gewährt werden, ohne diesen vollständig demontieren und entfernen zu müssen. Somit wird verhindert, dass größere Teile eines einzigen Luftverteilungsstrangs (wie im Stand der Technik) abmontiert werden müssen.

Bei einer bevorzugten Verfahrensvariante erfolgt der erste Zustand durch Bedrucken mit Luft aus dem Luftverteilungssystem. Das Bedrucken mit Luft aus dem Luftverteilungssystem hat sich als direkt und wirkungsvoll erwiesen.

Eine ebenfalls bevorzugte Verfahrensvariante ist dadurch gekennzeichnet, dass der zweite Zustand durch Ablassen von Luft aus dem Luftverteilungssystem erfolgt. Das Ablassen von Luft aus dem Luftverteilungssystem ist grundsätzlich durch Öffnen von Ventilen des Luftverteilungssystems möglich und daher leicht umsetzbar.

Bevorzugt wird bei einer weiteren Verfahrensvariante als Einsatzort ein Bereich oberhalb eines Überkopfgepäckfachs gewählt und der Luftverteilungsstrang wird dort angeordnet. Dieser Einsatzort oberhalb der Überkopfgepäckfächer hat sich in der Praxis als für die Luftführung geeignet gezeigt. Darüber hinaus ist ein solcher Einsatzort im Hinblick auf die Gewährung von Zugang zum Bereich hinter den Luftverteilungsstrang besonders effizient.

Bei einer alternativ bevorzugten Verfahrensvariante wird als Einsatzort ein Deckenbereich eines Oberdecks des Flugzeugrumpfs gewählt und der Luftverteilungsstrang wird dort angeordnet. Wenn der Luftverteilungsstrang im Deckenbereich angeordnet wird (also beispielsweise unmittelbar im Bereich der Kabinendecke am höchsten Punkt der Kabine), dann kann der vorteilhafte Zugang besonders einfach erzielt werden, indem beispielsweise Kabinendeckenabdeckungen entfernt und somit der Luftverteilungsstrang unmittelbar erreicht und die Luft anschließend abgelassen wird. Umfangreiche Vorarbeiten, um den Luftverteilungsstrang zu erreichen, können dann entfallen. In der Praxis kann auf diese Weise z.B. die Flugzeugrumpf-Primärstruktur hinter dem Luftverteilungsstrang zugänglich gemacht werden. Somit kann beispielsweise Zugang zu verschiedenen im Bereich der Flugzeugrumpfstruktur angeordneten Antennen gewährt werden.

Ebenfalls alternativ ist eine Verfahrensvariante bevorzugt, bei als Einsatzort ein Dreiecksbereich eines Unterdecks des Flugzeugrumpfs gewählt wird und der Luftverteilungsstrang dort angeordnet wird. Bei einer solchen Anordnung wird grundsätzlich von denselben Vorteilen Gebrauch gemacht wie bei den vorbeschriebenen Verfahrensvarianten. Im Unterdeck eines Flugzeugs, wie zum Beispiel einem Cargodeck, also in einem Bereich des Flugzeugrumpfs unterhalb eines Zwischenbodens, befinden sich üblicherweise zwei sogenannte Dreiecksbereiche. Diese sind in einer Querschnittsansicht des Flugzeugs jeweils durch die Außenstruktur des Flugzeugrumpfs (zum Beispiel Spanten und Stringer), die Querholme des Zwischenbodens (zum Beispiel die Träger des Zwischenbodens) und sogenannte Z-Streben, die üblicherweise vertikal zwischen einen Träger des Zwischenbodens und einem Spant verlaufen, definiert und befinden sich für gewöhnlich auf beiden Seiten des Flugzeugs. Die Z-Streben dienen insbesondere der Abstützung des Zwischenbodens in vertikaler Richtung sowie einer Aussteifung der Flugzeugstruktur unterhalb des Zwischenbodens. Die Dreiecksbereiche dienen oft der Verlegung von Leitungen in der Längsrichtung des Flugzeugs. Normalerweise sind keine störenden Komponenten in den Dreiecksbereichen angeordnet, insbesondere in Querrichtung des Flugzeugs, sodass Leitungen vom Bug bis zum Heck des Flugzeugs oder zumindest von den Tragflächen zum Bug bzw. zum Heck des Flugzeugs in den Dreiecksbereichen verlegt werden können. Der Dreiecksbereich eignet sich daher für die Anordnung eines erfindungsgemäßen luftführenden Luftverteilungsstrangs.

Besonders bevorzugt wird als fluiddichtes und flexibles Material ein Gewebestoff genutzt. Gewebestoffe haben sich in der Praxis bewährt und zeichnen sich durch eine hohe Widerstandsfähigkeit sowie Dichtigkeit und Reißfestigkeit aus.

Schließlich ist ganz besonders bevorzugt, dass der zweite Zustand durch Erzeugen eines Unterdrucks in dem Luftverteilungssystem erfolgt. Durch das Erzeugen eines Unterdrucks in dem Luftverteilungssystem kann das Volumen des oder der Luftverteilungsstränge maximal reduziert werden und somit der erfindungsgemäße Effekt des Schaffens eines Zugangs zu sonst verdeckten Bereichen maximal genutzt werden.

Die oben beschriebenen Aspekte und weitere Aspekte, Merkmale und Vorteile der Erfindung können ebenfalls aus den Beispielen der Ausführungsform entnommen werden, welche im Folgenden unter Bezugnahme auf die anhängenden Zeichnungen beschrieben wird.

### Beschreibung der Zeichnungen

In den Figuren werden gleiche Bezugszeichen für gleiche oder zumindest ähnliche Elemente, Komponenten oder Aspekte verwendet. Es wird angemerkt, dass im Folgenden Ausführungsformen im Detail beschrieben werden, die lediglich illustrativ und nicht beschränkend sind. In den Ansprüchen schließt das Wort "aufweisend" nicht andere Elemente aus und der unbestimmte Artikel "ein" schließt eine Mehrzahl nicht aus. Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken. Die Figuren sind nicht maßstäblich zu verstehen sondern haben nur schematischen und illustrativen Charakter. Es zeigen
- Figur 1: einen Querschnitt durch einen Bereich oberhalb eines Überkopfgepäckfachs mit dort angeordnetem straffen Luftverteilungsstrang,
- Figur 2: einen Querschnitt durch einen Bereich oberhalb eines Überkopfgepäckfachs mit dort angeordnetem schlaffen Luftverteilungsstrang,
- Figur 3: einen Querschnitt durch einen Deckenbereich eines Oberdecks eines Flugzeugrumpfs mit dort angeordnetem straffen Luftverteilungsstrang,
- Figur 4: einen Querschnitt durch einen Dreiecksbereich eines Unterdecks eines Flugzeugrumpfs mit dort angeordnetem straffen Luftverteilungsstrang,
- Figur 5: ein schematisches Ablaufdiagramm des erfindungsgemäßen Verfahrens, und
- Figur 6: eine perspektivische Ansicht eines Flugzeugs.

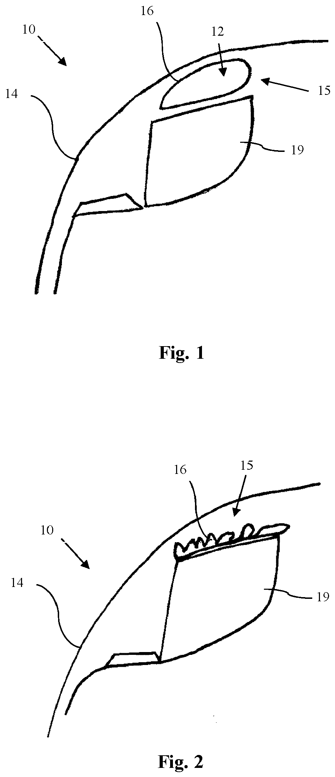

Die **Figur 1** zeigt einen Querschnitt durch einen Bereich oberhalb eines Überkopfgepäckfachs 19 in einer Kabine eines Flugzeugrumpfs 10. Der Flugzeugrumpf 10 weist eine Flugzeugrumpfstruktur mit einer Flugzeugaußenhaut 14 auf. Ein Luftverteilungssystem 12, das einen Luftverteilungsstrang 16 umfasst, der zumindest teilweise aus einem fluiddichten und flexiblen Material gebildet ist (beispielsweise ein Gewebestoff), wurde bereitgestellt und in dem Bereich 15 oberhalb des Überkopfgepäckfachs 19 als Einsatzort in dem Flugzeugrumpf 10 angeordnet. In Figur 1 ist der Luftverteilungsstrang 16 in einem ersten Zustand, in dem das flexible Material im Wesentlichen straff ist, dargestellt. Der erste Zustand des Luftverteilungsstrangs 16 wird eingenommen, um das Luftverteilungssystem 12 zu betreiben. Der erste Zustand kann durch Bedrucken mit Luft aus dem Luftverteilungssystem 12 erfolgen.

Dies ist möglich, da der Luftverteilungsstrang 16 zumindest teilweise aus dem fluiddichten und flexiblen Material gebildet ist. Er ist im Hinblick auf seine Form nachgiebig. Im ersten, bedruckten Zustand (wenn Luft während des Betriebs zu Klimatisierungs- und Versorgungszwecken über das Luftverteilungssystem 12 in die Flugzeugkabine geleitet wird) nimmt der Luftverteilungsstrang 16 sein volles Volumen ein und ist somit straff bzw. prall. Dann wird typischerweise der volle Querschnitt des Luftverteilungsstrangs ausgefüllt und das flexible Material ist gestrafft.

In **Figur 2** ist derselbe Querschnitt wie in der Figur 1 dargestellt, wobei im Unterschied dazu der Luftverteilungsstrang 16 in einen zweiten Zustand, in dem das flexible Material im Wesentlichen schlaff ist, gezeigt ist. Der zweite Zustand des Luftverteilungsstrangs 16 wird eingenommen, um den Bereich 15 oberhalb des Überkopfgepäckfachs 19 zu warten. Der zweite Zustand kann durch Ablassen von Luft aus dem Luftverteilungssystem 12 erfolgen. Alternativ kann der zweite Zustand durch Erzeugen eines Unterdrucks in dem Luftverteilungssystem 12 erfolgen. Im zweiten, nicht bedruckten Zustand (also in der Regel während der Wartung) kann sich die Form des Luftverteilungsstrangs 16 prinzipiell ändern und sein Volumen kann sich verringern. Dann kann der Querschnitt des Luftverteilungsstrangs 16 reduziert sein bzw. das flexible Material ist dann erschlafft.

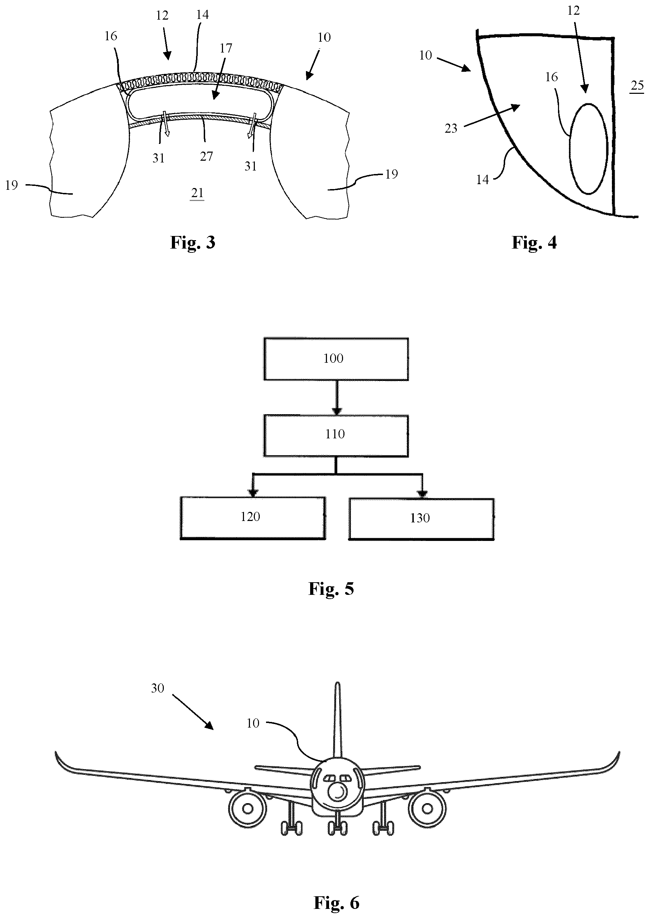

Die **Figur 3** zeigt einen alternativen Einsatzort für den Luftverteilungsstrang 16, nämlich einen Deckenbereich 17 eines Oberdecks 21 des Flugzeugrumpfs 10. Der Flugzeugrumpf 10 weist ebenfalls eine Flugzeugrumpfstruktur mit einer Flugzeugaußenhaut 14 auf. Entsprechend kann ein solcher Einsatzort für das Verfahren gewählt werden und der Luftverteilungsstrang 16 dort angeordnet werden. Der Luftverteilungsstrang 16 ist in der Figur 3 zwischen einer oberen Außenhaut 14 des Flugzeugrumpfs 10, zwei seitlichen Wänden der Überkopfgepäckfächer 19 und einer Kabinendecke 27 angeordnet. In der Darstellung sind von dem Luftverteilungsstrang 16 durch die Kabinendecke 27 hindurch zwei Luftauslässe 31 dargestellt, durch die Luft aus dem Luftverteilungsstrang 16 in die Kabine bzw. das Oberdeck 21 ausströmen kann (vgl. entsprechende Pfeile).

Alternativ kann, wie in der **Figur 4** dargestellt, als Einsatzort ein Dreiecksbereich 23 eines Unterdecks 25 des Flugzeugrumpfs 10 gewählt werden und der Luftverteilungsstrang 16 dort angeordnet werden. Der Flugzeugrumpf 10 weist ebenfalls eine Flugzeugrumpfstruktur mit einer Flugzeugaußenhaut 14 auf.

In der **Figur 5** ist ein Flussdiagramm dargestellt, welches das erfindungsgemäße Verfahren zur Nutzung eines Luftverteilungssystems 12 in einem Flugzeugrumpf 10 repräsentiert. Das Verfahren umfasst die folgenden Verfahrensschritte: Bereitstellen 100 eines Luftverteilungssystems 12, das einen Luftverteilungsstrang 16 umfasst, der zumindest teilweise aus einem fluiddichten und flexiblen Material gebildet ist, wobei der Luftverteilungsstrang 16, von einem ersten Zustand, in dem das flexible Material im Wesentlichen straff ist, in einen zweiten Zustand, in dem das flexible Material im Wesentlichen schlaff ist, wechseln kann, Anordnen 110 des Luftverteilungsstrangs 16 an einem Einsatzort 15, 17, 23 in dem Flugzeugrumpf 10, Einnehmen 120 des ersten Zustands des Luftverteilungsstrangs 16, um das Luftverteilungssystem 12 zu betreiben, oder Einnehmen 130 des zweiten Zustands des Luftverteilungsstrangs 16, um einen räumlichen Bereich in der Nähe des Einsatzorts 15, 17, 23 zu warten.

Die **Figur 6** zeigt schließlich ein Flugzeug 30 mit einem Flugzeugrumpf 10, bei dem das erfindungsgemäße Verfahren zur Nutzung des Luftverteilungssystems 12 in einem Flugzeugrumpf 10 zum Einsatz kommen kann.

## Patentansprüche

1. Verfahren zur Nutzung eines Luftverteilungssystems (12) in einem Flugzeugrumpf (10), mit den folgenden Verfahrensschritten:
a) Bereitstellen (100) eines Luftverteilungssystems (12),
das einen Luftverteilungsstrang (16) umfasst,
der zumindest teilweise aus einem fluiddichten und flexiblen Material gebildet ist,
wobei der Luftverteilungsstrang (16),
a. von einem ersten Zustand, in dem das flexible Material im Wesentlichen straff ist,
b. in einen zweiten Zustand, in dem das flexible Material im Wesentlichen schlaff ist,
wechseln kann,
b) Anordnen (110) des Luftverteilungsstrangs (16) an einem Einsatzort (15,17,23) in dem Flugzeugrumpf (10),
c) Einnehmen (120) des ersten Zustands des Luftverteilungsstrangs (16), um das Luftverteilungssystem (12) zu betreiben, oder
d) Einnehmen (130) des zweiten Zustands des Luftverteilungsstrangs (16), um einen räumlichen Bereich in der Nähe des Einsatzorts zu warten.

2. Verfahren nach Anspruch 1, **dadurch gekennzeichnet, dass** der erste Zustand durch Bedrucken mit Luft aus dem Luftverteilungssystem (12) erfolgt.

3. Verfahren nach Anspruch 1 oder 2, **dadurch gekennzeichnet, dass** der zweite Zustand durch Ablassen von Luft aus dem Luftverteilungssystem (12) erfolgt.

4. Verfahren nach einem der vorhergehenden Ansprüche, **dadurch gekennzeichnet, dass** als Einsatzort ein Bereich (15) oberhalb eines Überkopfgepäckfachs (19) gewählt wird und der Luftverteilungsstrang (16) dort angeordnet wird.

5. Verfahren nach einem der vorhergehenden Ansprüche, **dadurch gekennzeichnet, dass** als Einsatzort ein Deckenbereich (17) eines Oberdecks (21) des Flugzeugrumpfs (10) gewählt wird und der Luftverteilungsstrang (16) dort angeordnet wird.

6. Verfahren nach einem der vorhergehenden Ansprüche, **dadurch gekennzeichnet, dass** als Einsatzort ein Dreiecksbereich (23) eines Unterdecks (25) des Flugzeugrumpfs (10) gewählt wird und der Luftverteilungsstrang (16) dort angeordnet wird.

7. Verfahren nach einem der vorhergehenden Ansprüche, **dadurch gekennzeichnet, dass** als fluiddichtes und flexibles Material ein Gewebestoff genutzt wird.

8. Verfahren nach einem der vorhergehenden Ansprüche, **dadurch gekennzeichnet, dass** der zweite Zustand durch Erzeugen eines Unterdrucks in dem Luftverteilungssystem (12) erfolgt.
